# EUROPÄISCHE PATENTANMELDUNG

(11) **EP 1 251 680 A1**
(43) Veröffentlichungstag der Anmeldung: **23.10.2002**
(21) Anmeldenummer: 02100362.9
(22) Anmeldetag: 10.04.2002
(51) Int. Cl.: H04M 3/493, H04M 3/42, H04M 1/27

(54) **Sprachgesteuerter Verzeichnisdienst für Verbindung an ein Datennetzwerk**

(30) Priorität: 11.04.2001 DE 10118125
(71) Anmelder: Philips Corporate Intellectual Property GmbH, 20099 Hamburg (DE); Koninklijke Philips Electronics N.V., 5621 BA Eindhoven (NL)
(72) Erfinder: Lenke, Nils, Dr., Philips Corporate Int.Prop. GmbH, 52066 Aachen (DE)
(74) Vertreter: Volmer, Georg, Dipl.-Ing.

(57) **Zusammenfassung**

Beschrieben wird ein automatisches Auskunftssystem, welches zur Benutzung mit einem Endgerät eines Nutzers verbunden ist. Das automatisches Auskunftssystem weist eine Datenbank (1) auf, in der Teilnehmerdaten (TD) einer Vielzahl von Teilnehmern gespeichert sind. Zumindest ein Teil der Teilnehmerdaten (TD) umfasst jeweils eine Netzwerkadresse einer Kommunikationseinheit des jeweiligen Teilnehmers innerhalb eines Datennetzwerks. Außerdem weist das automatische Auskunftssystem, eine Sucheinrichtung (3) zum Suchen des gewünschten Teilnehmers auf Basis von vom Nutzer erhaltenen Suchparametern und ein Nutzer-Dialogsystem (2) zur Steuerung des automatischen Auskunftssystems durch den Nutzer und/oder zur Ausgabe von Eingabeaufforderungen und/oder von Teilnehmerdaten (TD) eines in der Datenbank (1) gefundenen Teilnehmers an den Nutzer auf. Das Nutzer-Dialogsystem (2) umfasst eine automatische Spracherkennung und eine akustischen Ausgabeeinrichtung. Darüber hinaus wird ein Verfahren zum Betrieb eines solchen automatischen Auskunftssystems beansprucht.

## Beschreibung

Die Erfindung betrifft ein automatisches Auskunftssystem, welches zur Benutzung mit einem Endgerät eines Nutzers verbunden ist, mit einer Datenbank, in der Teilnehmerdaten einer Vielzahl von Teilnehmern gespeichert sind, wobei zumindest ein Teil der Teilnehmerdaten jeweils eine Netzwerkadresse einer Kommunikationseinheit des jeweiligen Teilnehmers innerhalb eines Datennetzwerkes umfasst, mit einer Sucheinrichtung zum Suchen des gewünschten Teilnehmens anhand der in der Datenbank gespeicherten Teilnehmerdaten unter Verwendung von vom Nutzer erhaltenen Suchparametern und mit einem Nutzer-Dialogsystem zur Steuerung des automatischen Auskunftssystems durch den Nutzer und/oder zur Ausgabe von Eingabeaufforderungsn und/oder Teilnehmerdaten des gefundenen Teilnehmers an den Nutzer. Darüber hinaus betrifft die Erfindung ein Verfahren zum Betrieb eines solchen automatischen Auskunftssystems.

Ein seit langem bekannter Auskunftsdienst ist die Fernsprechauskunft, die mittels eines normalen Festnetztelefons, eines Mobilfunkgerätes oder auch mit anderen Endgeräten mit entsprechender Telefonfunktion angerufen werden kann, um dort die Telefonnummer eines anderen Teilnehmers zu erhalten. Hierzu sind in einer Datenbank des Auskunftsdienstes die Teilnehmerdaten wie Namen, Adressen und Telefonnummern bzw. Faxnummern einer Vielzahl von Teilnehmern gespeichert, und der jeweilige Nutzer der Auskunft nennt bestimmte Suchparameter, anhand derer dann der gewünschte Teilnehmer in der Datenbank gesucht wird. Bei den Suchparametern handelt es sich um die Suchkriterien wie z.B. Name, Wohnort, Vorwahl oder Branche bzw. Spezialisierungsgsbiet etc. sowie um die zugehörigen Suchbegriffe, z.B. "Meier", "Domweg", "München", "Zahnarzt". Bei den Telefonauskünften wird unterschieden zwischen der Branchenauskunft, bei der eine Branche und ein Ort eingegsben werden können und eventuell mehrere Anbieter dieser Branche an den Nutzer ausgegsben werden (sogenannter "Gelbe Seiten"- oder "Yellow Page"- Service) und einer branchenunabhängigen Auskunft, in der nach konkreten Teilnehmern gefragt wird (sogenannte "White Pages" oder "Pink Pages"). Weiterhin sind automatische Auskunftssysteme bereits in Datennetzwerken, beispielsweise im Internet oder in größeren Intranets, bekannt. Diese Auskunftssysteme funktionieren automatisch über ein Nutzer-Dialogsystem, in dem der jeweilige Nutzer über sein Endgerät, beispielsweise einen am Internet angeschlossenen PC, Steuerbefehle an das automatische Auskunftssystem übermittelt und vom Nutzer-Dialogsystem des automatischen Auskunftssystems die Suchparameter abgefragt werden und die Teilnehmerdaten des gefundenen Teilnehmers an den Nutzer ausgegeben werden Diese Systeme weisen dementsprechend eine Sucheinrichtung auf, welche, mittels des Nutzer-Dialogsystems angesteuert, anhand der in der Datenbank gespeicherten Teilnehmerdaten unter Verwendung der Suchparameter den gewünschte Teilnehmer bzw. die Teilnehmer einer bestimmten Branche sucht. Anders als bei den derzeit üblichen Fernsprechauskünften enthalten inzwischen einige der Datenbanken, die über das Internet erreichbar sind, bereits von einigen der Teilnehmer eine Netzwerkadresse einer Kommunikationseinheit des jeweiligen Teilnehmers innerhalb des Datennetzwerkes. Bei der Kommunikationseinheit handelt es sich beispielsweise um eine Mailbox oder eine Web-Page des Teilnehmers innerhalb des Internets. Derartige komfortable automatische Auskunftssysteme mit umfangreichen Datenbanken, welche nicht nur die Telefonnummer, sondern auch Adressen aufweisen, um über andere Netze als ein Telefonnetz mit dem jeweiligen Teilnehmer in Verbindung zu treten, können jedoch bislang nur über PCs bzw. mittels spezieller Endgeräte mit entsprechender Zugriffsmöglichkeit auf das Internet, beispielsweise sogenannte WAP-Handys, genutzt werden. Eine Abfragemöglichkeit über ein normales Telefon besteht ungünstigerweise nicht.

Es ist Aufgabe der vorliegenden Erfindung ein komfortables und umfangreiches automatisch betriebenes Auskunftssystem sowie ein Verfahren zum Betrieb eines solchen Auskunftssystems zu schaffen, welches von beliebigen Endgeräten aus, insbesondere von normalen Telefonen, genutzt werden kann.

Diese Aufgabe wird durch ein automatisches Auskunftssystem gemäß Anspruch 1 und ein Verfahren gemäß Anspruch 8 gelöst.

Erfindungsgemäß ist das Nutzer-Dialogsystem mit einer automatischen Spracherkennung, welche die vom Nutzer über das Endgerät gesendeten Sprachbefehle und/oder Suchparameter empfängt und erkennt, sowie einer akustischen Ausgabeeinrichtung ausgestattet. Durch die Sprachausgabeeinrichtung ist das Nutzer-Dialogsystem in der Lage, beispielsweise über ein normales Telefon gesprochene Eingabeaufforderungen auszuüben und damit die Suchparameter abzufragen oder auch die Teilnehmerdaten des gefundenen Teilnehmers an den Nutzer auszugeben.

Die Sprachausgabeeinrichtung weist beispielsweise eine Sprachsyntheseeinrichtung auf, welche aus gesprochenen Textabschnitten ein gewünschtes Wort oder einen gewünschten Satz zusammensetzt. Sie kann aber auch zusätzlich oder alternativ eine Datenbank mit Sound-Dateien mit vorgesprochenen Texten enthalten, die vom Nutzer-Dialogsystem entsprechend angesteuert zum passenden Zeitpunkt an den Nutzer übermittelt werden.

Zusätzlich zur Sprache kann die Sprachausgabeeinrichtung vorzugsweise auch Startsignale, um einem Nutzer zu signalisieren, dass nun eine Eingabe beispielsweise eines Steuerbefehls oder eines Suchparameters erfolgen sollte, oder Quittungstöne aussenden, die die Erkennung des eingegebenen Befehls bzw. Suchparameters quittieren. Der Begriff "Sprachausgabe" soll diese Möglichkeit einschließen. Das Nutzer-Dialogsystem weist vorzugsweise neben der automatischen Spracherkennung auch Mittel auf, um Steuerbefehle über die Tasten eines Telefons, beispielsweise die bei heutigen Telefonen üblichen DTMF-Tasten (Dual Tone Multi Frequency), zu empfangen und zu verarbeiten.

Aufgrund dieses Nutzer-Dialogsystems, welches in der Lage ist, auf rein akustischem Wege mit dem jeweiligen Nutzer zu kommunizieren, kann das Auskunftssystem von jedem normalen Telefon aus oder auch von einem PC oder anderen Endgeräten mit einem Mikrofon, einem Lautsprecher und einem Telefonanschluss, d.h. auch ohne speziellen Datenanschluss, verwendet werden. Im Gegensatz zu den bekannten komfortablen Auskunftssystemen im Internet hat dieses Auskunftssystem den Vorteil, dass es unabhängig von speziellen Geräten und Anschlussmöglichkeiten an das Internet ist und somit der Einsatzbereich nicht auf die Fälle begrenzt ist, an denen entsprechende Internetzugangsmöglichkeiten bestehen. Darüber hinaus hat dieses Auskunftssystem auch Vorteile für blinde Menschen, die auf die Nutzung eines akustisch arbeitenden Nutzer-Dialogsystems angewiesen sind.
Bei einem bevorzugten Ausführungsbeispiel der Erfindung werden in der Datenbank als Netzwerkadressen die E-Mail-Adressen von Mailboxen der jeweiligen Teilnehmer gespeichert. Alternativ oder zusätzlich kann auch die URL (Uniforme Resource Locator) einer definierten Seite im Internet, einer sogsnannten Web-Page, als Netzwerkadresse eingetragen werden. Der Begriff Web-Page ist im Übrigen im Sinne dieser Schrift umfassend zu sehen. Er soll unter anderem, die allgemein bekannten HTML-Seiten, aber auch Voice-XML- oder V-XML-Seiten bzw. ähnliche Seiten abdecken.

Bei einem besonders bevorzugten Ausführungsbeispiel weist das System außerdem ein Sprachinterface zur Herstellung einer Kommunikationsverbindung zu der die Netzwerkadresse aufweisenden Kommunikationseinheit des gefundenen Teilnehmers auf. Das heißt, es wird über das Sprachinterface über eine entsprechende Netzanschlusseinheit (Gateway) eine Verbindung zu der Kommunikationseinheit im Netz hergestellt. Dies gsschieht vorzugsweise auf Wunsch des Nutzers, beispielsweise durch Eingabe eines entsprechenden Steuerbefehls, nachdem dem Nutzer die jeweilige Netzwerkadresse genannt wurde und gegebenenfalls abgefragt wurde, ob eine Verbindung gewünscht wird.

Diese Kommunikationsverbindung kann derart ausgeführt sein, dass lediglich eine Nachricht übersendet werden kann. Es kann sich aber auch um eine bidirektionale Kommunikationsverbindung handeln, welche eine echte Kommunikation mit der Kommunikation-einheit im Netzwerk erlaubt, das heißt, dass sowohl Nachrichten und Steuersignale an die Kommunikationseinheit gssendet werden als auch Abfragen von Informationen durchgeführt werden.

Bei einer Ausführungsform weist das Sprachinterface Mittel zum Übersenden einer einfachen Sprachnachricht, beispielsweise einer sogenannten Voicemail, an eine Mailbox des gsfundenen Teilnehmers auf. Zum Übersenden einer solchen Sprachnachricht an die Mailbox des gsfundenen Teilnehmers bestehen verschiedene Möglichkeiten. Zum einen kann das Sprachinterface die Sprachnachricht in einer Sound-Datei aufzeichnen und eine Begleit-E-Mail erstellen, welche die Sound-Datei als Anhang enthält. Diese Begleit-E-Mail enthält die notwendigen Daten und hat das entsprechende Format, um die Begleit-E-Mail mit der Sound-Datei als Anhang an die gewünschte E-Mail-Adresse zu versenden. In einem solchen Fall kann eine Sprachnachricht unter anderem auch andere Geräusche, ein Musikstück oder dergleichen enthalten. Der Begriff Sprachnachricht ist insoweit umfassend zu sehen. Bei der Begleit-E-Mail kann es sich um eine E-Mail mit einem Standardtext wie beispielsweise "Bitte öffnen Sie die anliegende Sound-Datei" oder dergleichen handeln.

Bei einem alternativen Ausführungsbeispiel, wird die Sprachnachricht direkt in eine Textnachricht innerhalb einer geeigneten E-Mail konvertiert. Das heißt, es wird praktisch eine E-Mail diktiert bzw. die Sprachnachricht in ein E-Mail-Format umgewandelt. Diese E-Mail wird dann an die gewünschte E-Mail-Adresse versandt. In diesem Fall benötigt das Sprachinterface eine Spracherkennungseinrichtung.

Das System kann auch derart aufgebaut sein, dass eine Versendung von Sprachnachrichten wahlweise auf die eine oder andere der genannten Arten möglich ist.

Bei einer weiteren bevorzugten Ausführungsform weist das Sprachinterface als "Sprachportal" einen sprachgesteuerten Browser, einen sogenannten Voicebrowser, auf, mit dem eine Web-Page des Teilnehmers mit der gefundenen URL als Startseite aufgerufen werden kann. Es kann so über den Voicebrowser, ausgehend von der Startseite, im Internet gesurft werden, indem durch Sprachbefehle bestimmte Links auf einer gerade aktuellen Web-Page aktiviert werden und so eine andere Web-Page aufgerufen wird.

Mittels eines derartigen Sprachportals ist es zum einen möglich, speziell präparierte Internetseiten, welche für eine Sprachkommunikation ausgelegt sind, wie z.B. Voice-XML- oder V-XML-Seiten, aufzurufen. Im Prinzip besteht aber auch die Möglichkeit, "normale" HTML-Seiten aufzurufen, sofern der Voicebrowser durch eine geeignete Spracherkennungsund eine geeignete Sprachausgabeeinrichtung, beispielsweise eine Sprachsyntheseeinrichtung in der Lage ist, die Informationen auf der Internetseite in Sprache und umgekehrt Sprachinformationen des Nutzers in die von der HTML-Internetseite benötigte Befehle umzusetzen.

Ein besonders umfangreiches, komfortables, automatisches Auskunftssystem bietet sowohl die Möglichkeit, Sprachnachrichten an E-Mail-Adressen zu versenden, als auch über einen Voicebrowser Internetseiten aufzurufen.

Die Erfindung wird im Folgenden unter Hinweis auf die belgefügten Figuren anhand eines Ausführungsbeispiels näher erläutert. Die nachfolgend dargestellten Merkmale und die bereits oben beschriebenen Merkmale können nicht nur in den genannten Kombinationen, sondern auch einzeln oder in anderen Kombinationen erfindungswesentlich sein. Die Erfindung wird in dieser Schrift zum Teil anhand von umfassenderen Verfahrensblöcken und -schritten sowie durch allgemein bekannte Begriffe wie "aufrufen" (einer Web-Page), "surfen" (durch ein Netzwerk) oder "versenden" (einer E-Mail) etc. beschrieben. Es handelt sich hierbei um üblicherweise vom Fachmann in diesen Bereichen verwendete Repräsentationen von Operationen innerhalb von Computerspeichern bzw. Computernetzwerken. Es sollte nicht vergessen werden, dass es sich hierbei um Schritte handelt, welche physikalische Beeinflussungen von physikalischen Größen erfordern. Üblicherweise handelt es sich hierbei um Größen in Form von elektrischen oder magnetischen Signalen, die in der Lage sind, gespeichert, übermittelt, kombiniert, verglichen oder sonst wie in einem Computersystem manipuliert zu werden. Es stellen dar:
- Figur 1: eine schematische Architektur eines erfindungsgemäßen automatischen Auskunftssystems.
- Figur 2: einen einfachen Dialogfluss innerhalb eines Dialogsystems des erfindungsgemäßen Auskunftssystems zum Versenden einer Voicemail.
- Figur 3: einen einfachen Dialogfluss in einem Dialogsystem eines erfindungsgemäßen Auskunftssystems zum Aufruf einer Web-Page.

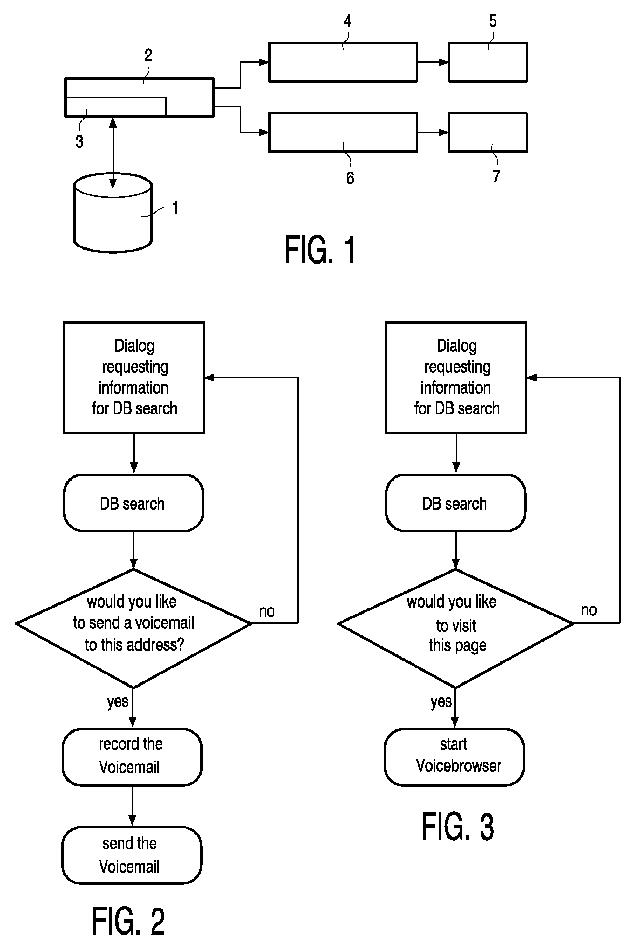

Das in Figur 1 gezeigte automatische Auskunftssystem erlaubt sowohl die Versendung einer Voicemail an eine E-Mail-Adresse eines gefundenen Teilnehmers als auch das Starten einer Web-Pags eines gsfundenen Teilnehmers. Eine wesentliche Komponente dieses automatischen Auskunftssystems ist eine Datenbank 1, in der Teilnehmerdaten TD von verschiedenen Teilnehmern, beispielsweise Fernsprechteilnehmern und/oder Teilnehmern, welche einen Anschluss an das Internet und dementsprechende Adressen besitzen, gespeichert sind. Diese Teilnehmerdaten umfassen folglich nicht nur die Namen, die örtliche Adresse sowie Telefon- und Faxnummern der jeweiligen Teilnehmer, sondern darüber hinaus-soweit vorhanden - alle bekannten Netzwerkadressen der verschiedensten Kommunikationseinheiten des Teilnehmers in einem Datennetzwerk, also beispielsweise die E-Mail-Adressen sowie die URLs von eventuell vorhandenen Web-Pages im Internet.

Neben der Datenbank 1 enthält das Auskunftssystem eine Sucheinrichtung 3 zum Suchen des gewünschten Teilnehmers anhand der in der Datenbank 1 gespeicherten Teilnehmerdaten TD unter Verwendung von vom Nutzer erhaltenen Suchparametern. Eine derartige Sucheinrichtung ist in Form von Sortware auf einem geeigneten Rechner, beispielsweise einem im Internet angeschlossenen und/oder an ein Telefonnetz angsschlossenen Server, installiert.

Um mit dem jeweiligen Nutzer in Kommunikation zu treten, weist das Auskunftssystem ein Nutzer-Dialogsystem 2 auf. Dieses Nutzer-Dialogsystem 2 ermöglicht erfindungsgemäß einen vollständig automatischen Sprachdialog mit dem Nutzer, da es eine automatische Spracherkennung und eine Sprachausgabeeinrichtung, beispielsweise eine Sprachsyntheseeinrichtung, aufweist. Mittels dieses Nutzer-Dialogsystems 2 hat der Benutzer die Möglichkeit, das automatische Auskunftssystem entsprechend einer vorgsgsbenen Menüführung wie gewünscht zu steuern und die gewünschten Suchparameter einzugeben sowie die ausgegebenen Teilnehmerdaten zu empfangen. Dieses Nutzer-Dialogsystem bildet somit die Kommunikationsoberfläche des Auskunftssystems für den jeweiligen Nutzer. Da es sich um ein akustisch arbeitendes Dialogsystem handelt, ist eine Kommunikation mittels eines beliebigen Endgerätes, welches eine Spracheingabe- und -ausgabeeinrichtung aufweist, möglich.

Das Auskunftssystem gemäß Figur 1 weist außerdem ein Sprachinterface 4 zum Versenden einer Sprachnachricht, z.B. einer Voicemail, auf. Außerdem weist das Auskunftssystem ein Sprachinterface 6 bzw. Sprachportal 6 mit einem Voicebrowser auf, mit dem eine Web-Page im Internet aufgerufen werden kann.
Mittels des ersten Sprachinterface 4 wird eine Sprachnachricht in einer Sound-Datei aufgezeichnet und an eine Standard- E-Mail angehängt. Diese E-Mail wird dann vom Sprachinterface 4 an ein E-Mail-Gateway 5 weitergeleitet, welches die E-Mail an eine von der Sucheinrichtung 3 in der Datenbank 1 gsfundene, zum gesuchten Teilnehmer gehörige E-Mail-Adresse versendet.

Das zweite Sprachinterface 6 mit dem Voicebrowser dient dazu, damit der Nutzer über ein nachfolgendes Internet-Gateway 7 mittels eines Endgeräts über Sprache bestimmte Web-Pages im Internet aufrufen kann bzw. auch durch das Internet surfen kann.

Das Sprachinterface 4 zum Versenden der Sprachnachricht via E-Mail bzw. das Sprachinterface 6 mit dem Voicebrowser und die jeweils zugehörigen Gateways 5, 7 können direkt Bestandteil des Auskunftssystems sein, das heißt beispielsweise auf dem gleichen Server in Form von Software installiert sein oder sogar softwaremäßig als Unterroutinen gemeinsam mit dem Dialogsystem 2 und der Sucheinrichtung 3 in einem geeigneten Programm implementiert sein. Teile des Systems können aber auch hardwaremäßig aufgebaut sein. Vorzugsweise sind hierbei die automatische Spracherkennung und/oder die Sprachausgabeeinrichtung derart ausgsstaltet, dass sowohl das Nutzer-Dialogsystem 2 als auch die beiden Sprachinterface 4 und 6 diese Komponenten nutzen bzw. auf diese Komponenten zugreifen können.

Alternativ kann das Sprachinterface 4 zum Versenden der Sprachnachricht sowie das Sprachportal 6 mit den zugehörigen Komponenten aber auch vom eigentlichen Auskunftssystem selbst räumlich getrennt sein. Diese Komponenten werden dann entsprechend vom Nutzer-Dialogsystem 2 aus aufgerufen bzw. der Nutzer wird an die entsprechenden Komponenten 4, 6 weitergeleitet. Ebenso kann beispielsweise bei einem Surfen durch das Internet mittels des Sprachportals 6 eine Weiterleitung erfolgen, wobei dies für den Nutzer ohnehin transparent ist.

Figur 2 zeigt einen einfachen Verfahrensablauf innerhalb des Nutzer-Dialogsystems 2 gemäß Figur 1, wenn eine Voicemail versendet werden soll. Der Nutzer beginnt dabei mit einem Dialog zur Abfrage der zur Datenbanksuche benötigten Informationen. Nachdem sämtliche Informationen vom Nutzer abgefragt wurden, das heißt sämtliche Suchparameter dem Auskunftssystem bekannt sind, beginnt die Datenbanksuche, wobei auch diese Datenbanksuche unter permanenter Nutzung des Nutzer-Dialogsystems 2 zur weiteren Abfrage von zusätzlichen Informationen, z.B. konkretisierenden Suchparametern, sowie zur Ausgabe von Zwischenergebnissen erfolgen kann. Ist eine E-Mail-Adresse eines gewünschten Teilnehmers gefunden worden, so wird über das Nutzer-Dialogsystem 2 abgefragt, ob der Nutzer eine Voicemail an diese Adresse verschicken möchte. Wenn der Nutzer dies verneint, so kehrt das System in den Ausgangszustand zurück und fragt beispielsweise ab, ob der Nutzer weitere Informationen haben möchte. Wenn der Nutzer dagegen die Frage bejaht, wird er an das Sprachinterface 4 weitergeleitet. Dort wird eine Voicemail aufgezeichnet und an eine speziell hierfür generierte Standard-E-Mail angehängt. Anschließend wird die Voicemail als Anhang zur generierten Standard-E-Mail über das Internet-Gateway 5 verschickt.

Figur 3 zeigt ein sehr ähnliches einfaches Ablaufbild innerhalb des Nutzer-Dialogsystems 2 für den Fall, dass eine URL einer Web-Page des gewünschten Teilnehmers gefunden wird. Auch hierbei erfolgt zunächst der Dialog zur Abfrage der Information zur Datenbanksuche. Anschließend wird die Datenbanksuche durchgerührt, und sobald eine URL einer Web-Page gefunden ist, wird der Nutzer gefragt, ob er diese Seite besuchen möchte. Wenn der Nutzer dies verneint, erfolgt wieder die Rückkehr in das Nutzer-Dialogsystem. Der Nutzer erhält dann die Gelegenheit, weitere Informationen abzufragen. Sofern er die Frage dagegen bejaht, wird der Nutzer automatisch an das Sprachportal 6 weitergeleitet und somit der Voicebrowser gestartet, um über den Internet-Gateway 7 die Web-Page unter der gefundenen URL aufzurufen.

Das erfindungsgemäße Auskunftssystem ist insbesondere für Firmen interessant, welche neben ihrer Adresse und Telefon- und Faxnummer in dem Auskunftssystem auch ihre E-Mail-Adresse sowie die Adresse der Homepage, auf der sich die jeweilige Firma im Internet präsentiert, an potentielle Kunden herausgaben wollen, und diesen Kunden auch gleich die Gelegenheit gaben wollen, weitere Informationen über die Firma einzuholen.

## Patentansprüche

1. Automatisches Auskunftssystem, welches zur Benutzung mit einem Endgerät eines Nutzers verbunden ist, mit
- einer Datenbank (1), in der Teilnehmerdaten (TD) einer Vielzahl von Teilnehmern gespeichert sind, wobei zumindest ein Teil der Teilnehmerdaten (TD) jeweils eine Netzwerkadresse einer Kommunikationseinheit des jeweiligen Teilnehmers innerhalb eines Datennetzwerks umfasst,
- einer Sucheinrichtung (3) zum Suchen des gewünschten Teilnehmers anhand der in der Datenbank (1) gespeicherten Teilnehmerdaten (TD) unter Verwendung von vom Nutzer erhaltenen Suchparametern,
- und mit einem Nutzer-Dialogsystem (2) zur Steuerung des automatischen Auskunftssystems durch den Nutzer und/oder zur Ausgabe von Eingabeaufforderungen und/oder von Teilnehmerdaten (TD) des gefundenen Teilnehmers an den Nutzer,
**dadurch gekennzeichnet,**
**dass** das Nutzer-Dialogsystem (2) eine automatische Spracherkennung und eine Sprachausgabeeinrichtung umfasst.

2. System nach Anspruch 1,
**dadurch gekennzeichnet,**
**dass** die Netzwerkadresse eine E-Mail-Adresse einer Mailbox und/oder eine URL einer Web-Page des jeweiligen Teilnehmers umfasst.

3. System nach Anspruch 1 oder 2,
**gekennzeichnet durch** ein Sprachinterface (4, 6) zur Herstellung einer Kommunikationsverbindung zu einer die Netzwerkadresse aufweisenden Kommunikationseinheit eines gefundenen Teilnehmers.

4. System nach Anspruch 3,
**dadurch gekennzeichnet,**
**dass** das Sprachinterface (4) Mittel zum Versenden einer Sprachnachricht an eine Mailbox des Teilnehmers umfasst.

5. System nach Anspruch 4,
**dadurch gekennzeichnet,**
**dass** das Sprachinterface (4) Mittel zum Aufzeichnen der Sprachnachricht in einer Sound-Datei und Mittel zum Erstellen einer Begleit-E-Mail, welche die Sound-Datei als Anhang enthält, umfasst.

6. System nach Anspruch 4 oder 5,
**dadurch gekennzeichnet,**
**dass** das Sprachinterface Mittel zum Konvertieren der Sprachnachricht in eine Textnachricht innerhalb einer E-Mail umfasst.

7. System nach einem der Ansprüche 3 bis 6,
**dadurch gekennzeichnet,**
**dass** das Sprachinterface (6) einen sprachgesteuerten Browser zum Aufrufen einer Web-Page des Teilnehmers umfasst.

8. Verfahren zum Betrieb eines automatisches Auskunftssystem, bei welchem anhand von Suchparametern, die mittels eines Endgeräts eines Nutzers über ein Nutzer-Dialogsystem (2) an das System übermittelt werden, Teilnehmer gesucht werden, deren in einer Datenbank (1) des Systems gespeicherte Teilnehmerdaten (TD) den Suchparametern entsprechen, und bei dem Teilnehmerdaten (TD) zumindest eines gefundenen Teilnehmers über das Nutzer-Dialogsystem (2) an den Nutzer ausgegeben werden, wobei zumindest ein Teil der Teilnehmerdaten (TD) jeweils eine Netzwerkadresse einer Kommunikationseinheit des jeweiligen Teilnehmers innerhalb eines Datennetzwerks umfasst,
**dadurch gekennzeichnet,**
**dass** das Nutzer-Dialogsystem (2) mittels einer automatische Spracherkennung vom Nutzer an das Auskunftssystem übermittelte Sprachbefehle und/oder Suchparameter erfasst und erkennt und mittels einer Sprachausgabeeinrichtung Eingabeaufforderungen und/oder die Teilnehmerdaten (TD) ausgibt.

9. Verfahren nach Anspruch 8,
**dadurch gekennzeichnet,**
**dass** E-Mail-Adressen von Mailboxen und/oder URLs von Web-Pages der Teilnehmer in der Datenbank (2) gespeichert und als Teilnehmerdaten (TD) an einen Nutzer ausgegeben werden

10. Verfahren nach Anspruch 8 oder 9,
**dadurch gekennzeichnet,**
**dass** mittels eines Sprachinterface (4,6) eine Kommunikationsverbindung zu einer die Netzwerkadresse aufweisenden Kommunikationseinheit eines gefundenen Teilnehmers hergestellt wird.

11. Verfahren nach Anspruch 10,
**dadurch gekennzeichnet,**
**dass** mittels des Sprachinterface (4) eine Sprachnachricht an eine Mailbox des Teilnehmers versandt wird.

12. Verfahren nach Anspruch 11,
**dadurch gekennzeichnet,**
**dass** die Sprachnachricht in einer Sound-Datei aufgezeichnet wird und eine Begleit-E-Mail erstellt wird, welche die Sound-Datei als Anhang enthält, und diese Begleit-E-Mail mit der angehängten Sound-Datei an die Mailbox des Teilnehmers versandt wird.

13. Verfahren nach Anspruch 11 oder 12,
**dadurch gekennzeichnet,**
**dass** die Sprachnachricht in eine Textnachricht innerhalb einer E-Mail konvertiert wird.

14. Verfahren nach einem der Ansprüche 10 bis 13,
**dadurch gekennzeichnet**
**dass** mittels eines sprachgesteuerten Browsers eine Web-Page des Teilnehmers als Internet-Startseite aufgerufen wird.
